## Europäisches Patentamt

## European Patent Office

## Office européen des brevets

(11) Veröffentlichungsnummer: **0 039 447**
**A1**

(12) ## EUROPÄISCHE PATENTANMELDUNG

(21) Anmeldenummer: **81103052.7**

(51) Int. Cl.³: **H 02 G 3/06**

(22) Anmeldetag: **23.04.81**

(30) Priorität: **07.05.80 DE 3017383**

(43) Veröffentlichungstag der Anmeldung: **11.11.81**
**Patentblatt 81/45**

(84) Benannte Vertragsstaaten: **AT BE CH DE FR GB IT LI NL SE**

(71) Anmelder: **Grünau, Dietrich, Säntisblick 5, D-7778 Markdorf (DE)**

(72) Erfinder: **Grünau, Dietrich, Säntisblick 5, D-7778 Markdorf (DE)**

(74) Vertreter: **Hübner, Hans-Jürgen, Dipl.-Ing., Mozartstrasse 21, D-8960 Kempten Allgäu (DE)**

(54) **Kabelverschraubung.**

(57) Eine Kabelverschraubung 10 besteht aus einer Schraubhülse 12, einer auf dieser verschraubbaren Klemmmutter 14, einem Dichtkörper 16 in der Klemmutter und einer Gleithülse 18 zwischen Dichtkörper und Klemmutter. Zwischen Dichtkörper 16 und Klemmutter wird mit Ausnahme eines Kontaktes im Klemmuttermund keine solche Berührungszone gebildet, die beim Verschrauben der Klemmutter ein Mitdrehen des Dichtkörpers bewirken könnte. Am Klemmuttermund wirkt die Reibkraft am geringsten Radius, weswegen das Mitnahmemoment klein genug bleibt.

Die Kabelverschraubung kann von Hand leicht verschraubt werden. Sie gewährleistet Gasdichtigkeit und eine hochwirksame, aber dennoch höchst schonende mechanische Zugentlastung und darüber hinaus einen absoluten Knickschutz für das Kabel im Klemmuttermund.

Die Erfindung betrifft nunmehr eine Kabelverschraubung für Schaltschränke, Maschinenanschlüsse, Steckverbindungen und dergl., bestehend aus einer Schraubhülse und einer mit dieser verschraubbaren Klemmutter, einem in der Klemmmutter angeordneten, mindestens einen zylindrischen Abschnitt aufweisenden und sich stirnseitig an der Schraubhülse abstützenden elastischen Dichtkörper und einem Drehschutzring zwischen Dichtkörper und Klemmutter, wobei die Innenfläche des Drehschutzringes konisch ausgebildet ist und seine Außenkontur der Innenkontur der Klemmutter entspricht.

Eine derartige Kabelverschraubung ist aus dem DE-GM 18 57 080 bekannt. Der Drehschutzring besteht aus einem stirnseitigen Einsatz in der Klemmutter und soll ein Mitdrehen des Dichtkörpers beim Verschrauben der Klemmutter verhindern. Der Dichtkörper ist ein Gummirohrstück gleichbleibender Wandstärke, das in die Bohrung der Klemmutter paßt. Zu Beginn der Montage liegt das stirnseitige Ende des Gummirohrstückes eng am zylindrischen Teil der Klemmmutter an und steht maßgeblich stirnseitig über die Klemmmutter vor. Die Klemmutter kann also nicht auf die Hülse aufgeschraubt werden, weil das Gummirohrstück als Sperre wirkt. Es muß erst ein axialer Druck ausgeübt werden, um das Gummirohrstück weiter in die Klemmutter hineinzuschieben, wobei es sich an der konischen Fläche des ringförmigen Einsatzes verformt. Dieser Vorgang ist umständlich und gefährlich, weil das der Schraubhülse zugewandte Ende des Gummirohrstückes verletzt werden kann. Nachdem das Gummirohrstück so weit axial in die Klemmutter eingedrückt worden ist, daß ihr Gewinde in das Gewinde der Schraubhülse faßt, wird beim Weiterdrehen der Klemmutter das Gummirohrstück axial bewegt und dabei radial verformt, so daß eine kraftschlüssige Klemmverbindung im Bereich des Klemmuttermundes eintritt. Das Gummirohrstück wird bei dieser Verformung über den größten Teil der Klemmutterbohrung an den Bohrungsumfang gepreßt. Beim Drehen der Klemmutter wird dieser Teil des Gummirohrstückes mitgedreht, im Gegensatz zum gegenüberliegenden Ende, auf das dank des Drehschutzringes keine Umfangskraft ausgeübt wird. Die Folge ist eine Torsionsbeanspruchung des Dichtkörpers, die zu einer Beschädigung führen kann. Der Nachteil des Mitdrehens der einen Hälfte des Dichtkörpers wird in dem DE-GM 18 57 080 auf Seite 5, unten auch ausdrücklich zugegeben. Ihm soll dadurch begegnet werden, daß in der Stirnfläche der Schraubhülse Rippen oder dergl. vorgesehen werden oder zwischen dem Dichtkörper und der Schraubhülse eine Rippenringscheibe eingesetzt wird. Abgesehen davon, daß durch Verwendung einer solchen Rippenringscheibe die stirnseitige Abdichtung verloren geht, bildet eine solche mit sägezahnartigen Fächern versehene Ringscheibe eine erhebliche Gefahr dafür, daß der Dichtkörper beschädigt wird. Aber auch unter Verwendung einer solchen Fächerscheibe kann das Mitdrehen des Dichtkörpers nicht sicher ausgeschlossen werden, weil die Kontaktfläche zwischen Dichtkörper und Klemmutter ein Mehrfaches derjenigen beträgt, die zwischen Dichtkörper und Fächerscheibe herrscht, zumal diese sich ja zusammen mit dem Dichtkörper relativ zur Schraubhülse drehen kann.

Die DE-OS 21 33 814 zeigt eine Kabelverschraubung, bei der konische Dichtkörper verwendet werden, die mit konischen Innenflächen von Schraubhülse und Klemmutter zusammenwirken. Eine Drehschutzeinrichtung, die ein Mitdrehen der Dichtkörper mit der Klemmutter verhindern würde, ist hier nicht vorgesehen.

Die DE-OS 19 11 652 zeigt ebenfalls eine Kabelverschraubung unter Verwendung eines außen konischen Dichtkörpers, der mit einer, einen Innenkonus aufweisenden Klemmutter zusammenwirkt, wobei die Konizitäten übereinstimmen. Mangels einer Drehschutzeinrichtung besteht auch hier die Gefahr des Mitdrehens des Dichtkörpers, die zu einem Abscheren seines dünnen Endes führen kann, wo gerade die Hauptklemmung auftritt.

Aus der DE-OS 25 47 914 ist eine Kabeleinführung bekannt, bei der ein konischer Abschnitt des Dichtkörpers ein Käfig und der Innenkonus der Klemmutter jeweils voneinander abweichende Konizitäten aufweisen. Der Käfig ist axial geschlitzt, so daß Klemmzungen entstehen, deren Enden beim Aufschrauben der Klemmutter klauenartig in das Kabel eindringen und für eine Zugentlastung sorgen. Ein zylindrischer Abschnitt des Käfigs bildet eine Radiallagerung für den relativ kurzen Dichtkörper, dessen sich konisch verjüngendes Ende die Dichtlippe bildet, die beim eingelegten Kabel elastisch nach außen geformt wird und eine Abdichtung bewirken soll.

Abdichtung und Zugentlastung werden durch zwei verschiedene Elemente bewirkt. Das Festziehen der Klemmutter ist nur mit Werkzeugen durchführbar. Dabei wird das Kabel nicht schonend geklemmt, sondern lokal eingedrückt und kann dadurch beschädigt werden. In unerwünschter Weise wird eine Sollknickstelle geschaffen. Eine Gasdichtigkeit ist nicht gewährleistet.

Aufgabe der Erfindung ist es, die eingangs genannte Kabelverschraubung dahingehend zu verbessern, daß unter Aufrechterhaltung einer kraftschlüssigen Verbindung mit dem Kabel und einer ausreichenden Abdichtung ein Mitdrehen des Dichtkörpers beim Verschrauben der Klemmutter sicher verhindert wird.

Diese Aufgabe wird erfindungsgemäß gelöst durch die Kombination folgender Merkmale:

a) Der Drehschutzring ist als dünnwandige konische Hülse ausgebildet, die einen an das Ende mit größter Öffnungsweite angrenzenden zylindrischen Bund aufweist,

b) zwischen dem zylindrischen Abschnitt des Dichtkörpers und der Klemmutter besteht ein Ringspalt,

c) der zylindrische Bund der Drehschutzhülse greift in den Ringspalt ein und

d) am zylindrischen Abschnitt des Dichtkörpers ist eine äußere Ringlippe angeformt, die im Ringspalt aufgenommen und im Innenumfang der Klemmutter geführt ist.

Dank der Tatsache, daß der Dichtkörper nur über die äußeren Ringlippen einen Linienkontakt mit der Klemmutter hat, wird eine einwandfreie Führung des Dichtkörpers in der Klemmutter erreicht, die erst die Beibehaltung des konzentrischen Ringspaltes während der Verformung des Dichtkörpers sicherstellt. Das andere Ende des Ringspaltes wird vom zylindrischen Bund der Drehschutzhülse begrenzt. Mit Ausnahme der ringförmigen Führungslippe, die mit der Klemmutter einen Linienkontakt hat, steht kein Teil des Dichtungskörpers mit der Klemmmutter in Verbindung. Die Klemmutter läßt sich somit sehr leicht und ohne Zuhilfenahme von Werkzeugen mit der Schraubhülse verschrauben, da sie trotz der zunehmenden Verformung des Dichtkörpers mit diesem nicht in Reibeingriff steht. Auf den Dichtkörper werden keine Umfangskräfte ausgeübt. Er wird somit nirgendwo auf Drehung beansprucht. Ein Abscheren von Teilen des Dichtkörpers ist somit ausgeschlossen.

Anhand der Zeichnung, die ein Ausführungsbeispiel darstellt, sei die Erfindung näher beschrieben.

Es zeigt:

Figur 1 eine teilweise geschnittene Ansicht der neuen Kabelverschraubung, wobei die untere Hälfte im unverformten Zustand in Arbeitsstellung gezeigt ist und

Figur 2 die Ansicht einer in Arbeitsstellung befindlichen Kabelverschraubung in Form eines Winkelsteckers.

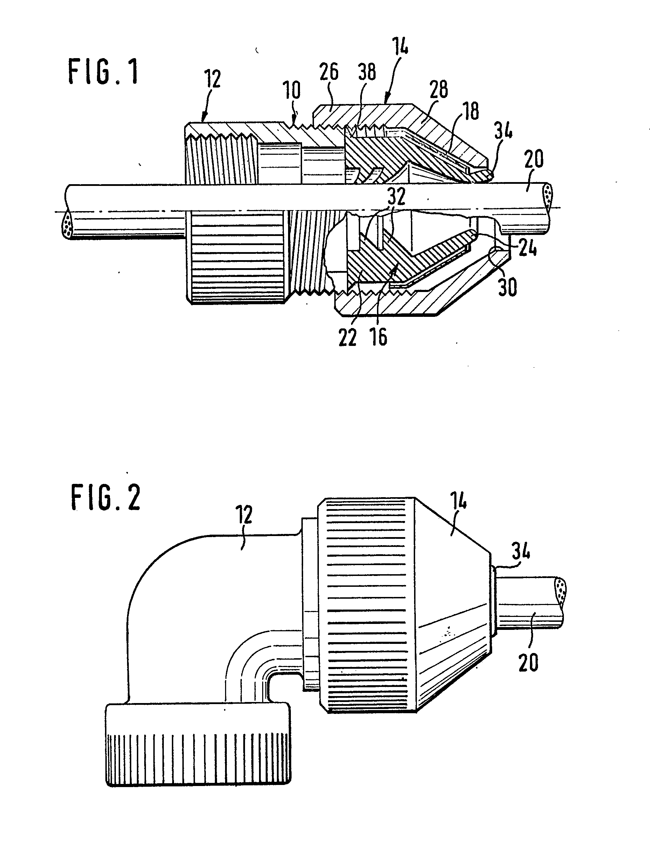

Gemäß Figur 1 besteht die allgemein mit 10 bezeichnete Kabelverschraubung aus einer Schraubhülse 12, einer Klemmmutter 14, die auf der Schraubhülse 12 verschraubbar ist, einem Dichtkörper 16, der innerhalb der Klemmutter 14 liegt und einer Gleithülse 18, welche sich zwischen dem Dichtkörper 16 und der Klemmutter 14 befindet. Die Kabelverschraubung 10 ist von einem Kabel 20 durchsetzt.

Die Schraubhülse 12 gemäß Figur 1 ist beispielsweise für einen Stecker vorgesehen. Der Dichtkörper 16 hat einen zylindrischen Abschnitt 22 und einen sich an diesen anschließenden dünnwandigen, konischen Abschnitt 24. Der Außendurchmesser des zylindrischen Abschnittes 22 ist etwas kleiner als der Innendurchmesser des zylindrischen Teils 26 der Klemmutter 14. Die Klemmutter hat einen sich an den zylindrischen Abschnitt 26 anschließenden konischen Abschnitt 28, der in einer kreisförmigen Öffnung 30 endet, deren Innenradius größer als der Außenradius des Kabels 20 ist, und zwar um einen Betrag, der gleich oder größer als die Dicke des konischen Abschnittes 24 des Dichtkörpers 16 an seinem Ende ist.

Wesentlich ist, daß die innere konische Fläche des konischen Klemmutter-Abschnittes 28 und die äußere konische Fläche des konischen Abschnittes 24 des Dichtkörpers 16 bezüglich der Konizität gleich sind. Die Gleithülse 18 hat ebenfalls einen konischen Abschnitt von gleicher Konizität wie der Innenkonus der Klemmutter und der Außenkonus des Dichtkörpers. An den konischen Abschnitt der Gleithülse 18 schließt sich am großen Durchmesser ein zylindrischer Bund an. Dieser greift in den Ringspalt zwischen den Teilen 22 und 26 ein.

Die Mantellinienlänge des Innenkonus der Klemmutter 14 und die Mantellinienlänge des konischen Abschnittes der Gleithülse 18 sind etwa gleich. Die Gleithülse kann vorteilhafterweise geringfügig vorstehen. Dagegen ist die Mantellinienlänge des konischen Abschnittes 24 des Dichtkörpers 16 mindestens um die axiale Breite der Öffnung 30 der Klemmutter 14 größer. Wenn die Gleithülse 18 geringfügig über den konischen Abschnitt der Klemmutter vorsteht, verkrallt sich der Dichtkörper 16 an der Gleithülse und diese Verformung des Dichtkörpers bleibt beim Lösen der Klemmutter erhalten. Die Gleithülse ist dünnwandig und hat überall die gleiche Wandstärke. Die Gleithülse besteht vorzugsweise aus Polyamid, könnte jedoch auch aus Metall bestehen. Wesentlich ist, daß die Gleithülse 18 an ihrer Außenfläche eine Reibpaarung mit der Klemmutter bildet, welche einen möglichst geringen Reibungskoeffizienten hat.

Der zylindrische Abschnitt 22 des Dichtkörpers 16 weist am inneren Umfang zwei ringförmige Dichtlippen 32 auf, die im Querschnitt keilförmig sind, wobei jeweils eine Keilflanke radial liegt und die andere Keilflanke zur Schraubhülse 12 hingerichtet ist. Insgesamt bildet die mittlere Keildichtung der Dichtungsringe 32 einen Winkel von etwa 90° oder mehr mit dem Konuswinkel des Abschnittes 24 des Dichtkörpers 16. Die äußere (linke)

Keildichtung hat einen geringfügig kleineren Innendurchmesser als die mittlere Dichtung.

Die innere Konusfläche des konischen Abschnittes 24 des Dichtkörpers 16 hat einen kleineren Konizitätswinkel als deren äußere Fläche, so daß dieser konische Abschnitt 24 im Querschnitt ebenfalls keilförmig ausgebildet ist, sich also in der Wandstärke zum freien Ende hin verjüngt. Es ist aber auch möglich, die innere Fläche des konischen Abschnittes aus einer ersten (linken) Konusfläche mit größerer Konizität auszubilden, etwa gleich derjenigen der Außenfläche und eine zweite innere Konusfläche mit wesentlich geringerer Konizität anzuschließen, die dann mindestens nahezu zylindrisch ist. Diese Ausbildung eignet sich besonders für kleine Größen der Kabelverschraubung.

Wie aus der unteren Hälfte der Figur 1 hervorgeht, liegen die radial inneren Enden des konischen Abschnittes 24 und der Dichtlippen 32 auf einem kleineren Durchmesser, als er dem Außendurchmesser des Kabels 20 entspricht. Es genügt, daß der konische Abschnitt 24 und die Lippen 22 des Dichtkörpers im unverformten Zustand nur geringfügig "in die Kontur des Kabels 20 hineinragen". Dies ermöglicht eine besonders einfache Montage des Kabels. Wird dann die Klemmutter 14 auf der Hülse 12 verschraubt, was dank der Gleithülse 18 sehr leicht von
Hand, d.h. ohne Zuhilfenahme von Werkzeugen möglich
ist, so verformt sich der einstückige Dichtkörper, wobei verschiedene Dichtzonen gebildet werden. Das verjüngte Ende des konischen Abschnittes 24 wird in den
Spalt zwischen der Öffnung 30 der Klemmutter und dem
Kabel 20 eingequetscht, wobei eine Axialstreckung des
Dichtkörperendes stattfindet, derart, daß der Dichtkörper wulstartig aus der Klemmutter 14 nach außen vorsteht, wie bei 34 in Figur 2 veranschaulicht ist. Die
Quetschung bewirkt eine hohe Gasdichtigkeit und gleichzeitig mechanische Sicherung des Kabels 20 in der Kabelverschraubung 10, und zwar wird eine kraftschlüssige
Verklemmung erzielt, ohne das Kabel örtlich unterschiedlich zu beanspruchen. Die Verklemmung erfolgt
gleichmäßig über den gesamten Umfang und über eine gewisse axiale Breite, so daß das Kabel schonend gehalten
wird. Der vorstehende Wulst 34 bewirkt einen hochwirksamen Kabelknickschutz. Dank der Tatsache, daß außer im
Klemmuttermund kein Teil des konischen Abschnittes und
außer einem noch zu beschreibenden äußeren Führungsflansch 38 kein Teil des zylindrischen Abschnittes des
Dichtkörpers unmittelbar mit der Klemmutter 14 in Kontakt steht, wird beim Verschrauben der Klemmutter 14
der Dichtkörper 16 in Umfangsrichtung nicht belastet,
so daß das Kabel nicht mitgedreht wird und eine Abschergefahr ausgeschlossen ist. Der Kontakt im Klemmuttermund ist, da er auf geringstem Durchmesser liegt, bezüglich des Mitnahmedrehmomentes unschädlich.

Wie eingangs gesagt, ist der Außendurchmesser des zylindrischen Abschnittes 22 des Dichtkörpers 16 etwas kleiner als das Innengewinde der Klemmutter 14. Um aber eine wirksame Umfangsabdichtung vorzusehen, ist angrenzend an die sich an der Schraubhülse 12 anlegende Stirnfläche des Dichtkörpers ein äußerer Führungsringflansch 38 einstückig am Dichtkörper 16 ausgebildet, der sich nach außen konisch verjüngt und der in das Gewinde der Klemmutter eingreift, wenn die Klemmutter verschraubt wird. Der Dichtungskörper ist damit in der Klemmutter radial geführt und gewährleistet eine hochwirksame axiale und radiale Abdichtung.

Der Führungsflansch 38 bildet eine im Querschnitt etwa dreieckförmige Dichtlippe, die in das Gewinde der Klemmutter mit ihrer Spitze gewindeartig eingreift und dadurch beim Verschrauben praktisch kein Drehmoment von der Klemmutter erhält. Der Führungsringflansch ist aber wesentlich, um ein einseitiges Eindrücken des Dichtkörpers in den Ringspalt und ein ungleichmäßiges Verformen im Bereich der inneren Lippen 32 sicher zu vermeiden. In einer praktischen Ausführungsform ist der Schenkelwinkel der dreieckförmigen Dichtlippe 38 etwa 15°.

Figur 2 veranschaulicht eine Kabelverschraubung ähnlich derjenigen gemäß Figur 1, jedoch ist hier die Schraubhülse in Form eines Winkelsteckers ausgebildet.

Es versteht sich, daß die dargestellte Kabelverschraubung hinsichtlich der Schraubhülse auch anders ausgebildet sein kann, beispielsweise mit einem Außengewinde und eine Stellring versehen werden kann, um diese Hülse beispielsweise in ein Maschinengehäuse einzuschrauben.

PATENTANSPRÜCHE

1. Kabelverschraubung für Schaltschränke, Maschinenanschlüsse, Steckverbindungen und dergl., bestehend aus
einer Schraubhülse und einer mit dieser verschraubbaren Klemmutter, einem in der Klemmutter angeordneten, mindestens einen zylindrischen Abschnitt aufweisenden und sich stirnseitig an der Schraubhülse abstützenden elastischen Dichtkörper und einem Drehschutzring zwischen Dichtkörper und Klemmutter, wobei die Innenfläche des Drehschutzringes konisch
ausgebildet ist und seine Außenkontur der Innenkontur der Klemmutter entspricht, g e k e n n z e i c h -
n e t   d u r c h   die Kombination folgender Merkmale:

   a) Der Drehschutzring ist als dünnwandige, konische Hülse (18) ausgebildet, die einen an das
      Ende mit größter Öffnungsweite angrenzenden
      zylindrischen Bund aufweist,

   b) zwischen dem zylindrischen Abschnitt (22) des
      Dichtkörpers (16) und der Klemmutter (14) besteht ein Ringspalt,

c) der zylindrische Bund der Drehschutzhülse (18) greift in den Ringspalt ein und

d) am zylindrischen Abschnitt (22) des Dichtkörpers (16) ist eine äußere Ringlippe (38) angeformt, die im Ringspalt aufgenommen und am Innenumfang der Klemmutter geführt ist.

2. Kabelverschraubung nach Anspruch 1, dadurch gekennzeichnet, daß sich an den zylindrischen Abschnitt (22) des Dichtkörpers (16) ein Hohlkegelabschnitt (24) anschließt, dessen Außenkonizität mit der Konizität der Drehschutzhülse (18) im unverformten Zustand im wesentlichen übereinstimmt.

3. Kabelverschraubung nach Anspruch 2, dadurch gekennzeichnet, daß sich die Wandstärke des Hohlkegelabschnittes (24) im unverformten Zustand des Dichtkörpers (16) zum freien Ende hin verjüngt.

4. Kabelverschraubung nach Anspruch 2 oder 3, dadurch gekennzeichnet, daß der Dichtkörper (16) im Axialabstand von seinem Hohlkegelabschnitt (24) mindestens eine nach innen weisende ringförmige Dichtlippe (32) aufweist, die im Querschnitt etwa keilförmig ausgebildet und unter einem Winkel von mindestens 90° zum Hohlkegelabschnitt (24) verläuft.

5. Kabelverschraubung nach Anspruch 4, dadurch gekennzeichnet, daß die vom Klemmuttermund (30) abgewandte Keilfläche der Dichtlippe (32) etwa radial liegt.

6. Kabelverschraubung nach Anspruch 4 oder 5, dadurch gekennzeichnet, daß zwei im Axialabstand liegende Dichtlippen (32, 32) vorgesehen sind, von denen die dem Klemmuttermund näher liegende Lippe einen geringfügig größeren Innendurchmesser aufweist als die andere Lippe.

7. Kabelverschraubung nach Anspruch 1, dadurch gekennzeichnet, daß die axiale Länge des konischen Abschnittes der Gleithülse (18) geringfügig größer als die entsprechende Länge der inneren Konusfläche der Klemmutter (14) ist.

8. Kabelverschraubung nach einem der Ansprüche 1 bis 4, dadurch gekennzeichnet, daß die Drehschutzhülse (18) aus Kunststoff, insbesondere Polyamid oder Teflon oder dergl. besteht.

0039447

1/1

FIG. 1

FIG. 2

Europäisches Patentamt

**EUROPÄISCHER RECHERCHENBERICHT**

0039447

EP 81 10 3052

| | EINSCHLÄGIGE DOKUMENTE | | KLASSIFIKATION DER ANMELDUNG (Int. Cl.) |
|---|---|---|---|
| Kategorie | Kennzeichnung des Dokuments mit Angabe. soweit erforderlich. der maßgeblichen Teile | betrifft Anspruch | |
| | <u>NL - A - 64 04678</u> (BROKELMANN)<br>* Seite 3, Zeilen 14-32;<br>Figuren 1,2 *<br><br>-- | 1 | H 02 G 3/06 |
| | <u>US - A - 2 857 176</u> (McTAGGART)<br>* Spalte 2, Zeilen 4-38;<br>Figuren 1-5 *<br><br>-- | 1 | |
| | <u>US - A - 4 022 966</u> ( GAJAJIVA)<br>* Spalte 3, Zeile 62 - Spalte 4,<br>Zeile 16; Figur 2 *<br><br>-- | 1-3 | RECHERCHIERTE SACHGEBIETE (Int. Cl.) |
| | <u>DE - C - 679 653</u> (A.E.G.)<br>* Seite 1, Zeilen 51-62; Seite 2,<br>Zeilen 1-54; Figur 1 *<br><br>-- | 1,2 | H 02 G 3/06<br>H 02 K 5/22<br>H 01 R 13/52 |
| | <u>DE - A - 2 835 832</u> (GRUNAU)<br>* Seite 7, letzter Absatz -<br>Seite 9, Absatz 1;<br>Figur 1 *<br><br>-- | 1,3-7 | |
| | <u>FR - A - 2 358 766</u> (LAPP)<br>* Seite 7, Zeilen 1-26;<br>Figur 5 *<br>& DE - A - 2 631 996<br>& DE - A - 2 720 137<br><br>------ | 1,8 | KATEGORIE DER GENANNTEN DOKUMENTE<br><br>X: von besonderer Bedeutung<br>Y: von besonderer Bedeutung<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br><br>&: Mitglied der gleichen Patent-familie, übereinstimmendes Dokument |
| | Der vorliegende Recherchenbericht wurde für alle Patentansprüche erstellt | | |
| Recherchenort | Abschlußdatum der Recherche | Prüfer | |
| Den Haag | 31-07-1981 | TIELEMANS | |

EPA form 1503.1  06.78